# EUROPÄISCHE PATENTSCHRIFT

(11) **EP 2 011 625 B1**
(45) Veröffentlichungstag und Bekanntmachung des Hinweises auf die Patenterteilung: **30.01.2013**
(21) Anmeldenummer: 08007078.2
(22) Anmeldetag: 10.04.2008
(51) Int. Cl.: B29C 47/26, B29C 47/70, B29C 49/04, B29C 47/30

(54) **Mehrfachextrusionskopf**
Multiple extrusion head
Tête d'extrusion multiple

(30) Priorität: 02.07.2007 DE 102007030677
(43) Veröffentlichungstag der Anmeldung: 07.01.2009
(73) Patentinhaber: W. Müller GmbH, 53842 Troisdorf (DE)
(72) Erfinder: Walter, Ulrich, 53797 Lohmar (DE)
(74) Vertreter: Müller, Thomas Michael

(56) Entgegenhaltungen:
- WO-A1-96/17116
- DE-A1- 2 229 857

## Beschreibung

Die Erfindung betrifft einen Mehrfachextrusionskopf für Extrusionsblasformmaschinen nach dem Oberbegriff des Anspruchs 1,

WO 96/17116 A1 zeigt einen Mehrfachextrusionskopf gemäß dem Oberbegriff des Anspruchs 1 für eine Spinnanlage. Die Spinnanlage umfasst einen Balken, der als geschlossenes Gehäuse mit einem Innenraum ausgestaltet ist, in dem Verteilkanäle für das Extrudat in Form von Rohren angeordnet sind. Um zu gewährleisten, dass in den verschiedenen Verteilkanälen das Extrudat nicht unterschiedlich abgekühlt wird, sind die Verteilkanäle gleich lang ausgebildet und müssen auf einem mehr oder weniger großen Umweg geführt werden, wobei sich eine räumliche Gestaltung der einzelnen Verteilkanäle ergibt.

Die DE-OS 21 14 465 beschreibt eine Vorrichtung zum gleichmäßigen Verteilen plastifizierter Kunststoffe von einem Extruder zu mehreren Blas- oder Spritzköpfen, welche einen Verteilerblock umfasst, in dem parallele Kanäle in einer Ebene liegend angeordnet sind. Ein erster Kanal ist mit zwei dazu parallelen Kanälen verbunden und diese speisen jeweils zwei weitere parallele Kanäle, welche jeweils zwei Ausgänge besitzen. Der erste Kanal wird zentral gespeist. Es können bei dem dort erläuterten Beispiel acht in einer Ebene nebeneinander liegende Blas- oder Spritzköpfe versorgt werden. Schwierig ist bei dieser Ausführungsform das Reinigen der Verteilvorrichtung bei einem Stillstand der Anlage. Ebenso ist die Herstellung des Blocks aufwendig, da die Kanäle in Form von Bohrungen dargestellt sind. Diese müssen jeweils durch Stopfen verschlossen werden. Die Ausführung berücksichtigt nur in einer Ebene nebeneinander liegende Bias- oder Spritzköpfe.

Der Erfindung liegt die Aufgabe zugrunde, einen Mehrfachextrusionskopf zu schaffen, bei dem jeweils mehrere in mindestens zwei parallelen Reihen angeordnete Extrusionsköpfe ausgehend von einem mit einem Extruder verbundenen Masseeingang versorgt werden können, wobei dieser einfach herzustellen und zu warten ist.

Gelöst wird diese Aufgabe erfindungsgemäß durch einen Mehrfachextrusionskopf für Extrusionsblasformmaschinen gemäß Anspruch 1.

Dabei ist von Vorteil, dass die erste und die zweite Verteilvorrichtung in den Ebenen, die durch die Reihen gebildet werden und in denen auch die Kanäle liegen, geteilt sind. Auch die dritte Verteilvorrichtung ist in einer Ebene quer dazu, die die Verteilkanäle enthält, die die den Reihen zugehörigen Verteilkanäle versorgt, getrennt. Die Trennung bewirkt eine vereinfachte Herstellung, da die einzelnen Kanäle kontinuierlich und mit einem Verlauf hergestellt werden können und bei abrupten Unterteilun-gen vermieden werden können. Dies bedeutet, dass die Erstreckungsrichtung der Verteilkanäle so gewählt werden kann, dass eine gleichmäßige Verteilung der Masse auf die Extrusionsköpfe erfolgt. Ein wesentlicher Vorteil ist jedoch, dass nicht nur mehrere nebeneinander in einer Ebene angeordnete Extrusionsköpfe versorgt werden können, sondern eine Verteilung auch auf mehrere Ebenen bzw. Reihen möglich ist, so dass die Extrusionsköpfe sowohl hinter- als auch nebeneinander in einer Mehrzahl angeordnet werden können. Durch die Teilung wird auch das Reinigen vereinfacht und die Querschnittsgestaltung der Kanäle ist nicht auf eine zylindrische Bohrung beschränkt.

In Ausgestaltung der Erfindung ist vorgesehen, dass der dritte Masseeingang einen Anschluss zu einem Extruder bildet.

Günstig ist, wenn, wie ferner vorgeschlagen, die ersten Verteilkanäle und die zweiten Verteilkanäle jeweils paarweise zu einem Hauptkanal zusammengefasst sind und die Hauptkanäle jeweils mit dem ersten Masseeingang oder dem zweiten Masseeingang verbunden sind. Hierdurch wird die Weglänge für die Verteilung günstig.

Vorzugsweise ist vorgesehen, dass je erster Ebene und zweiter Ebene vier oder mehr Extrusionsköpfe vorgesehen sind.

Die Erfindung ist nicht auf die Anordnung in zwei Ebenen beschränkt, sie ist auch auf drei oder mehr Ebenen anwendbar, so dass vorgesehen ist, dass zu der ersten Ebene und der zweiten Ebene mindestens eine weitere parallele Ebene vorgesehen ist, in der Extrusionsköpfe angeordnet sind, deren Verteilvorrichtungen jeweils Verteilkanäle und Masseeingänge umfassen, die entsprechend der ersten Verteilvorrichtung ausgebildet und in der entsprechenden weiteren Ebene geteilt sind.

Es ist auch möglich, dass die erste Verteilvorrichtung und die zweite Verteilvorrichtung sowie gegebenenfalls weitere Verteilvorrichtungen, die in zueinander parallelen Ebenen geteilt sind, alle zusammen oder in Gruppen zusammen gefasst, eine Einheit bilden.

Ein bevorzugtes Ausführungsbeispiel der Erfindung ist in der Zeichnung schematisch dargestellt.

Es zeigt
- Figur 1: eine Vorderansicht auf einen Mehrfachextrusionskopf mit mehreren in einer ersten Ebene nebeneinander angeordneten Extrusionsköpfen,
- Figur 2: eine Seitenansicht zu Figur 1, wobei auch einer der in einer zweiten Ebene nebeneinander angeordneten Extrusionsköpfe sichtbar ist,
- Figur 3: die in der Anordnung gemäß Figur 1 gezeigten Verteilvorrichtungen in einer ersten Ansicht und
- Figur 4: eine Seitenansicht zu Figur 3.

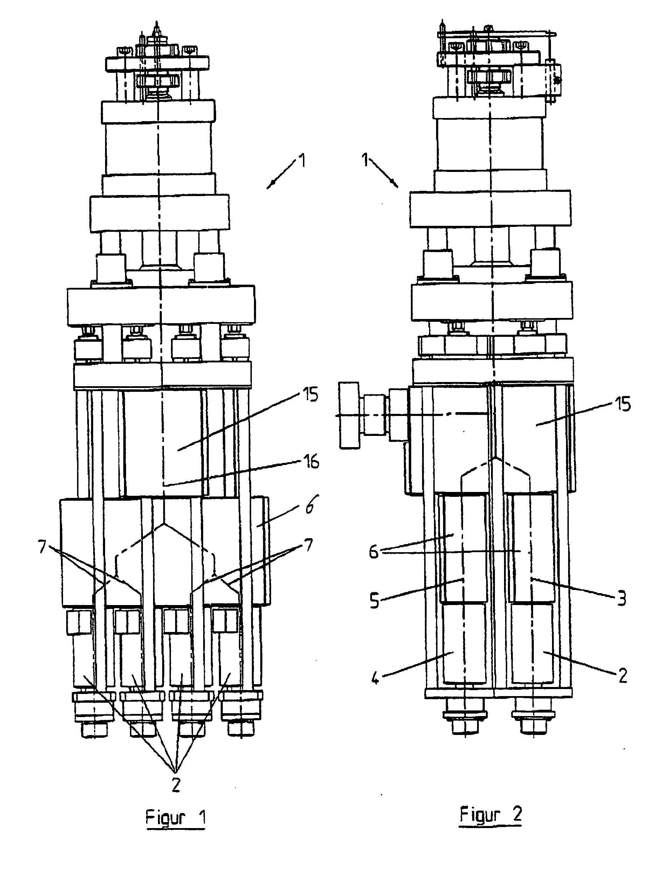

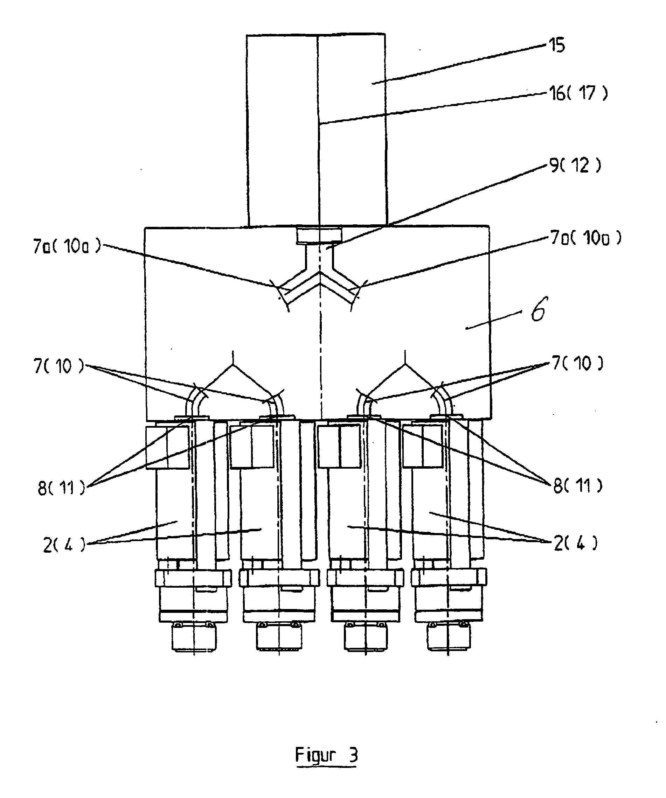

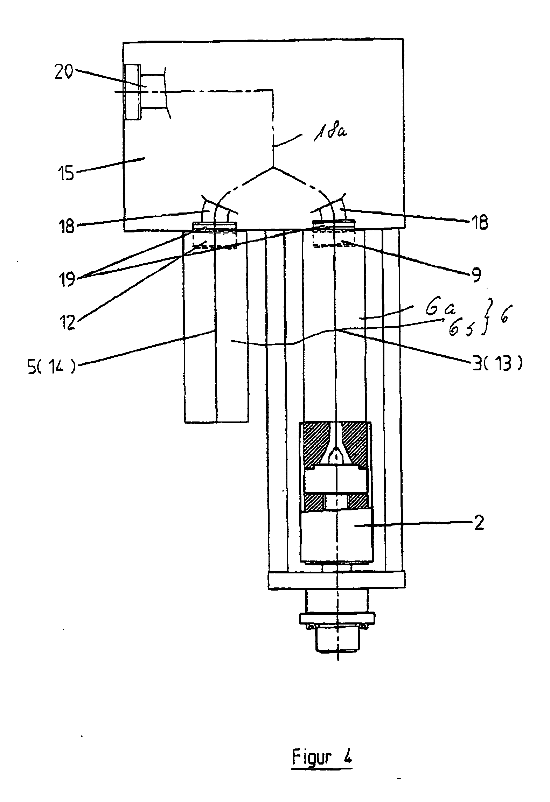

Nachfolgend werden die Figuren 1 bis 4 zusammen beschrieben. Die Figuren 3 und 4 sind im Verhältnis zur Darstellung in den Figuren 1 und 2 vergrößert. Darüber hinaus sind die Verteilkanäle nur schematisch durch strichpunktierte Linien in einigen Bereichen ihres Verlaufs dargestellt. Die Auslegung des Querschnitts der einzelnen Verteilkanäle und dessen Veränderung über den Verlauf der Verteilkanäle ist entsprechend dem Erfahrungswissen auszulegen. Die Anordnung der Verteilkanäle entsprechend der Erfindung erlaubt jedoch eine größere Freiheit hinsichtlich der Querschnittsgestaltung.

Der in den Figuren dargestellte Mehrfachextrusionskopf 1 umfasst erste Extrusionsköpfe 2, die einer ersten Ebene 3 nebeneinander angeordnet sind.

In den Zeichnungsfiguren 1 und 3 sind nur die in der ersten Reihe entlang der ersten Ebene 3 nebeneinander angeordneten ersten Extrusionsköpfe 2 sichtbar. Zweite Extrusionsköpfe 4 befinden sich in einer zweiten Ebene 5 hinter der in den Figuren 1 und 3 dargestellten ersten Ebene 3. Diese zweite Ebene 5 und die in dieser rastergleich zu den ersten Extrusionsköpfen 2 angeordneten zweiten Extrusionsköpfe 4 sind aus Figur 2 ersichtlich, wobei jedoch nur der erste zur zweiten Ebene 5 gehörende zweite Extrusionskopf 4 erkennbar ist, weil er die in der Zeichnungsebene von Figur 2 dahinter liegenden zweiten Extrusionsköpfe 4 verdeckt.

Zur Versorgung der ersten Extrusionsköpfe 2 und der zweiten Extrusionsköpfe 4 mit einem plastifizierten Kunststoffmassestrom und zur Verteilung desselben auf die Extrusionsköpfe 2 und 4 dienen eine erste Verteilvorrichtung 6a, eine zweite Verteilvorrichtung 6b und eine dritte Verteilvorrichtung 15.

Die erste Verteilvorrichtung 6a und die zweite Verteilvorrichtung 6b sind gleich ausgebildet, so dass nachfolgend nur die erste stellvertretend für beide beschrieben wird. Beide Verteilvorrichtungen 6a und 6b können zu einer Verteilvorrichtung 6 zusammengefasst werden, so dass die Kanäle für die beiden in einer ersten und in einer zweiten Reihe, d. h. die erste Ebene 3 und die zweite Ebene 5 umfassen kann. Wie insbesondere aus den Figuren 2 und 4 ersichtlich, ist eine erste Verteilvorrichtung 6a und eine zweite Verteilvorrichtung 6b vorgesehen, die jeweils einen plattenförmigen Aufbau aufweisen, wobei jeweils zwei einzelne Platten vorgesehen sind, die an den entsprechenden Ebenen, nämlich der ersten Ebene 3 bzw. der zweiten und dazu parallelen Ebene 5 aneinander stoßen. Die einander zugewandten Flächen der ersten Verteilvorrichtung 6a weisen die ersten Verteilkanäle 7 und die der zweiten Verteilvorrichtung 6b weisen die zweiten Verteilkanäle 10, die der zweiten Ebene 5 zugehörig sind, auf.

Die in der ersten Verteilvorrichtung 6 angeordneten ersten Verteilkanäle 7 münden in einem Hauptkanal 7a. Die beiden Hauptkanäle 7a sind zu dem ersten Masseeingang 9 zusammengeführt und die entsprechend der ersten Verteilvorrichtung 6a angeordneten zweiten Verteilkanäle 10 sind zu einem Hauptkanal 10a und diese zu einem zweiten Masseeingang 12 zusammengeführt. Der erste Masseeingang 9 und der zweite Masseeingang 12 befinden sich in zueinander versetzten parallelen Ebenen, die durch die erste Trennfuge 13 der ersten Verteilvorrichtung 6a und der zweiten Verteilvorrichtung 6b gebildet werden.

Die ersten Verteilkanäle 7 und die zweiten Verteilkanäle 10 weisen zu den zugehörigen ersten Extrusionsköpfen 2 bzw. zweiten Extrusionsköpfen 4 hin jeweils einen ersten Austritt 8 bzw. zweiten Austritt 11 auf.

Der erste Masseeingang 9 und der dazu beabstandete zweite Masseeingang 12 werden über eine dritte Verteilvorrichtung 15 mit einem Massestrom versorgt. Dies erfolgt über zwei parallele dritte Austritte 19, die durch einen Hauptkanal 18a zusammen geführt sind und von einem gemeinsamen dritten Masseeingang 20 aus versorgt werden, welcher beispielsweise mit dem Extruder in Verbindung steht und von dort mit einem plastifizierten Kunststoffmassestrom versorgt wird.

Die dritten Verteilkanäle 18 liegen in einer dritten Ebene 16, die rechtwinklig zu der ersten Ebene 3 und der zweiten Ebene 5 in der dritten Verteilvorrichtung verläuft. In dieser dritten Ebene 16 ist die zweite Verteilvorrichtung 15, die ebenfalls einen plattenförmigen Aufbau aufweist, durch eine dritte Trennfuge 17 geteilt. An die aneinander stoßenden Flächen der die dritte Verteilvorrichtung 15 bildenden Platten sind die dritten Verteilkanäle 18 bzw. der Hauptkanal 18a eingearbeitet.

### Bezugszeichenliste

- 1: Mehrfachextrusionskopf
- 2: erste Extrusionsköpfe
- 3: erste Ebene
- 4: zweite Extrusionsköpfe
- 5: zweite Ebene
- 6: Verteilvorrichtung
- 6a,: erste Verteilvorrichtung
- 6b: zweite Verteilvorrichtung
- 7: erste Verteilkanäle
- 7a: Hauptkanäle
- 8: erster Austritt
- 9: erster Masseeingang
- 10: zweite Verteilkanäle
- 10a: Hauptkanäle
- 11: zweiter Austritt
- 12: zweiter Masseeingang
- 13: erste Trennfuge
- 14: zweite Trennfuge
- 15: dritte Verteilvorrichtung
- 16: dritte Ebene
- 17: dritte Trennfuge
- 18: dritte Verteilkanäle
- 18a: Hauptkanal
- 19: dritter Austritt
- 20: dritter Masseeingang

## Patentansprüche

1. Mehrfachextrusionskopf (1) für Extrusionsblasformmaschinen, umfassend
- mehrere erste Extrusionsköpfe (2), die in einer ersten Reihe, eine erste Ebene (3) bildend, nebeneinander ortsfest angeordnet sind,
- mehrere zweite Extrusionsköpfe (4), die in einer zweiten Reihe, eine zur ersten Ebene (3) parallele zweite Ebene (5) bildend, nebeneinander ortsfest angeordnet sind,
- eine erste Verteilvorrichtung (6, 6a) mit
- ersten Verteilkanälen (7), von denen jeweils einer mit einem ersten Extrusionskopf (2) in Verbindung steht und alle einen gemeinsamen ersten Masseeingang (9) aufweisen,
- eine zweite Verteilvorrichtung (6, 6b) mit
- zweiten Verteilkanälen (10), von denen jeweils einer mit einem der zweiten Extrusionsköpfe (4) in Verbindung steht und alle einen gemeinsamen zweiten Masseeingang (12) aufweisen,
- eine dritte Verteilvorrichtung (15) mit dritten Verteilkanälen (18),
- wobei die beiden dritten Verteilkanäle (18) von einem gemeinsamen dritten Masseeingang (20) ausgehen und
- wobei einer der beiden dritten Verteilkanäle (18) mit dem ersten Masseeingang (9) und der weitere der beiden dritten Verteilkanäle (18) mit dem zweiten Masseeingang (12) verbunden ist,
**dadurch gekennzeichnet,**
**dass** die ersten Verteilkanäle (7) in einer der ersten Ebene (3) entsprechenden Ebene angeordnet sind,
**dass** die zweiten Verteilkanäle (10) in einer der zweiten Ebene (5) entsprechenden Ebene angeordnet sind,
**dass** die erste Verteilvorrichtung (6a) im Bereich der ersten Ebene (3) getrennt ist und zwei einzelne Platten aufweist, die an der ersten Ebene (3) aneinander stoßen,
**dass** die zweite Verteilvorrichtung (6b) im Bereich der zweiten Ebene (5) getrennt ist und zwei einzelne Platten aufweist, die an der zweiten Ebene (5) aneinander stoßen,
**dass** die dritten Verteilkanäle (18) in einer zur ersten Ebene (3) und der zweiten Ebene (5) rechtwinklig verlaufenden dritten Ebene (16) angeordnet sind und
**dass** die dritte Verteilvorrichtung (15) in der dritten Ebene (16) getrennt ist.

2. Mehrfachextrusionskopf nach Anspruch 1,
**dadurch gekennzeichnet,**
**dass** der dritte Masseeingang (20) einen Anschluss zu einem Extruder bildet.

3. Mehrfachextrusionskopf nach Anspruch 1,
**dadurch gekennzeichnet,**
**dass** die ersten Verteilkanäle (7) und die zweiten Verteilkanäle (10) jeweils paarweise zu einem Hauptkanal (7a, 10a) zusammengefasst sind und dass die Hauptkanäle (7a, 10a) jeweils mit dem ersten Masseeingang (9) oder dem zweiten Masseeingang (12) verbunden sind.

4. Mehrfachextrusionskopf nach einem der Ansprüche 1 bis 3,
**dadurch gekennzeichnet,**
**dass** je erster Ebene (3) und zweiter Ebene (5) vier oder mehr Extrusionsköpfe (2, 4) vorgesehen sind.

5. Mehrfachextrusionskopf nach einem der Ansprüche 1 bis 3,
**dadurch gekennzeichnet,**
**dass** zu der ersten Ebene (3) und der zweiten Ebene (5) mindestens eine weitere parallele Ebene vorgesehen ist, in der Extrusionsköpfe angeordnet sind, deren Verteilvorrichtungen jeweils Verteilkanäle und Masseeingänge umfassen, die entsprechend der ersten Verteilvorrichtung ausgebildet und in der entsprechenden weiteren Ebene geteilt sind.

6. Mehrfachextrusionskopf nach einem der Ansprüche 1 oder 5
**dadurch gekennzeichnet,**
**dass** die erste Verteilvorrichtung (6a) und die zweite Verteilvorrichtung (6b) sowie gegebenenfalls weitere Verteilvorrichtungen, die in zueinander parallelen Ebenen geteilt sind, alle zusammen oder in Gruppen zusammen gefasst, eine Einheit bilden.

## Claims

1. Multiple extrusion head (1) for extrusion blow moulding machines comprising
- several first extrusion heads (2), which are stationary arranged next to each other in a first row forming a first plane (3),
- several second extrusion heads (4), which are stationary arranged next to each other in a second row, forming a second plane (5), which is parallel to the first plane (3),
- a first distributor (6, 6a) with
- first distribution passages (7), of which respectively one is connected to a first extrusion head (2) and which all have a joint first material inlet (9),
- a second distributor (6, 6b) with
- second distribution passages (10), of which respectively one is connected to one of the second extrusion heads (4) and which all have a joint second material inlet (12),
- a third distributor (15) with third distribution passages (18),
- wherein the two third distribution passages (18) start from a joint third material inlet (20) and
- wherein one of the two third distribution passages (18) is connected to the first material inlet (9) and the other of the two third distribution passages (18) is connected to the second material inlet (12),
**characterised in**
**that** the first distribution passages (7) are arranged in a plane, corresponding to the first plane (3),
**that** the second distribution passages (10) are arranged in a plane, corresponding to the second plane (5),
**that** the first distributor (6a) is split in the area of the first plane (3) and has two individual plates, which abut each other at the first plane (3),
**that** the second distributor (6b) is split in the area of the second plane (5) and has two individual plates, which abut each other at the second plane (5), that the third distribution passages (18) are arranged in a third plane (16) extending at a right angle to the first plane (3) and to the second plane (5) and that the third distributor (15) is split in the third plane (16).

2. Multiple extrusion head according to claim 1,
**characterised in**
**that** the third material inlet (20) forms a connection to an extruder.

3. Multiple extrusion head according to claim 1,
**characterised in**
**that** the first distribution passages (7) and the second distribution passages (10) are respectively combined in pairs to a main passage (7a, 10a) and that the main passages (7a, 10a) are respectively connected to the first material inlet (9) or the second material inlet (12).

4. Multiple extrusion head according to one of claims 1 to 3,
**characterised in**
**that** four or more extrusion heads (2, 4) are provided for the first plane (3) and for the second plane (5).

5. Multiple extrusion head according to one of claims 1 to 3,
**characterised in**
**that** at least one further parallel plane is provided in addition to the first plane (3) and the second plane (5), in which parallel plane the extrusion heads are arranged, whose distributors respectively comprise distribution passages and material inlets, which are formed correspondingly to the first distributor and are split in the corresponding further plane.

6. Multiple extrusion head according to one of claims 1 or 5,
**characterised in**
**that** the first distributor (6a) and the second distributor (6b) as well as possible further distributors, which are split in planes parallel to each other, all together or combined in groups, form a unit.

## Revendications

1. Tête d'extrusion multiple (1) pour machines de moulage par extrusion-soufflage, comprenant :
- plusieurs premières têtes d'extrusion (2) qui sont disposées à emplacement fixe les unes près des autres sur une première rangée en formant un premier plan (3),
- plusieurs secondes têtes d'extrusion (4) qui sont disposées à emplacement fixe les unes près des autres sur une seconde rangée en formant un second plan (5) parallèle au premier plan (3),
- un premier dispositif répartiteur (6, 6a) comportant
- des premiers canaux répartiteurs (7) dont respectivement un est en liaison avec une première tête d'extrusion (2) et tous présentent une première entrée de masse commue (9),
- un deuxième dispositif répartiteur (6, 6b) comportant
- des deuxièmes canaux répartiteurs (10) dont respectivement un est en liaison avec une des deuxièmes têtes d'extrusion (4) et tous présentent une deuxième entrée de masse commune (12),
- un troisième dispositif répartiteur (15) comportant des troisièmes canaux répartiteurs (18),
- les deux troisièmes canaux répartiteurs (18) sortant d'une troisième entrée de masse commune (20) et
- un des deux troisièmes canaux répartiteurs (18) étant relié à la première entrée de masse (9) et l'autre des deux troisièmes canaux répartiteurs (18) à la deuxième entrée de masse (12),
**caractérisée en ce que**
les premiers canaux répartiteurs (7) sont disposés dans un plan correspondant au premier plan (3),
les deuxièmes canaux répartiteurs (10) sont disposés dans un plan correspondant au deuxième plan (5),
le premier dispositif répartiteur (6a) est divisé au niveau du premier plan (3) et présente deux plaques individuelles qui se rejoignent au niveau du premier plan (3),
le deuxième dispositif répartiteur (6b) est séparé au niveau du deuxième plan (5) et présente deux plaques individuelles qui butent l'une contre l'autre au niveau du deuxième plan (5),
les troisièmes canaux répartiteurs (18) sont disposés dans un troisième plan (16) s'étendant orthogonalement par rapport au premier plan (3) et au deuxième plan (5) et que
le troisième dispositif répartiteur (15) est divisé au niveau du troisième plan (16).

2. Tête d'extrusion multiple selon la revendication 1,
**caractérisée en ce que**
la troisième entrée de masse (20) établit une jonction avec une extrudeuse.

3. Tête d'extrusion multiple selon la revendication 1,
**caractérisée en ce que**
les premiers canaux répartiteurs (7) et les deuxièmes canaux répartiteurs (10) sont respectivement réunis par paires en un canal principal (7a, 10a) et que
les canaux principaux (7a, 10a) sont respectivement reliés à la première entrée de masse (9) ou à la deuxième entrée de masse (12).

4. Tête d'extrusion multiple selon une des revendications 1 à 3,
**caractérisée en ce que**,
par premier plan (3) et par deuxième plan (5), quatre têtes d'extrusion ou plus (2, 4) sont prévues.

5. Tête d'extrusion multiple selon une des revendications 1 à 3,
**caractérisée en ce**
**qu'**il est prévu en plus du premier plan (3) et du deuxième plan (5) au moins un autre plan parallèle dans lequel sont disposées les têtes d'extrusion dont les dispositifs répartiteurs comprennent respectivement des canaux répartiteurs et des entrées de masse qui sont réalisés suivant le premier dispositif répartiteur et sont divisés dans l'autre plan correspondant.

6. Tête d'extrusion multiple selon une des revendications 1 ou 5,
**caractérisée en ce que**
le premier dispositif répartiteur (6a) et le deuxième dispositif répartiteur (6b) ainsi qu'éventuellement d'autres dispositifs répartiteurs qui sont divisés en plans parallèles entre eux sont rassemblés tous ensemble ou en groupes en formant une unité.
